## Europäisches Patentamt
## European Patent Office
## Office européen des brevets

(11) Veröffentlichungsnummer: **0 168 775**

**B1**

(12) # EUROPÄISCHE PATENTSCHRIFT

(45) Veröffentlichungstag der Patentschrift:
**27.04.88**

(51) Int. Cl.⁴: **B 60 K 23/04**

(21) Anmeldenummer: **85108633.0**

(22) Anmeldetag: **11.07.85**

(54) Vorrichtung zum form- oder kraftschlüssigen Betätigen einer Differentialsperre.

(30) Priorität: **12.07.84 DE 3425691**

(43) Veröffentlichungstag der Anmeldung:
**22.01.86 Patentblatt 86/4**

(45) Bekanntmachung des Hinweises auf die Patenterteilung:
**27.04.88 Patentblatt 88/17**

(84) Benannte Vertragsstaaten:
**AT DE FR GB IT**

(56) Entgegenhaltungen:
**EP-A-0 128 477**
**WO-A-81/02049**
**DE-A-2 164 324**
**DE-B-1 555 228**
**DE-C-307 351**
**DE-C-1 085 046**
**US-A-3 987 689**
**US-A-4 012 968**

(73) Patentinhaber: **Klöckner- Humboldt- Deutz
Aktiengesellschaft, Deutz- Mülheimer- Strasse
111 Postfach 80 05 09, D-5000 Köln 80 (DE)**

(72) Erfinder: **Meiners, Hans- Heinrich, Dr.- Ing.,
Jungholzpfad 9, D-5063 Overath- Vilkerath (DE)**
Erfinder: **Mertins, Karl- Heinz, Dr.- Ing.,
Rathausstrasse 2, D-5000 Köln 90 (DE)**
Erfinder: **Mahler, Heinrich, Dipl.- Ing., Hausacker
20a, D-5064 Rösrath (DE)**

## Beschreibung

Die Erfindung bezieht sich auf eine Vorrichtung zum form- oder kraftschlüssigen Betätigen der Differential sperre an einem zumindest zweiachsigen Fahrzeug, insbesondere an einem land- und/oder bauwirtschaftlich nutzbaren Fahrzeug mit einem Ausgleichsgetriebe, wobei Geberelemente zum Erfassen von Meßwerten des Lenkwinkels und der Fahrgeschwindigkeit des Fahrzeugs vorgesehen sind, die bei Überschreiten oder Unterschreiten von bestimmten Grenzwerten über Stellorgane ein selbsttätiges Ein- bzw. Ausschalten der Differentialsperre bewirken, und mit einem Schaltorgan zum willkürlichen Betätigen der Differentialsperre.

Es ist aus der WO-A-81/02 049 eine gattungsgleiche Vorrichtung zum Betätigen einer Differentialsperre bekanntgeworden, bei der Geberelemente zum Erfassen von Meßwerten des Lenkwinkels, der neutralen Getriebestellung und dem Bereich der Fahrgeschwindigkeit vorgesehen sind. Alle Meßwerte werden hierbei elektrisch erfaßt, elektronisch verarbeitet und die sich daraus ergebenden Befehle zum Betätigen der Differentialsperre werden hydraulisch ausgeführt. Eine derartige Vorrichtung ist vor allem für die Anwendung von Straßenfahrzeugen geeignet, da hierbei sowohl die Fahrgeschwindigkeit als auch der Lenkwinkel stark variieren. Bei landwirtschaftlich nutzbaren Fahrzeugen ist dagegen die Arbeitsgeschwindigkeit bei den meisten Feldarbeiten im wesentlichen gleichbleibend, so daß eine Betätigung der Differentialsperre nach den von der Arbeitsgeschwindigkeit ausgehenden Meßwerten kaum erfolgreich wäre.

Die am 19.12.1984 veröffentlichte, EP-A-0 128 477 befaßt sich mit einem Regelsystem für eine Differentialsperre, das zwei Schaltkreise aufweist, von denen der erste fur sich und der zweite nur in Verbindung mit dem ersten Schaltkreis im System arbeitsfähig ist. Die Differentialsperre kann über den ersten Schaltkreis durch Handbetätigung eines Schalters eingerückt werden und zwar abhängig von einer bestimmten Fahrgeschwindigkeit bei nicht betätigten Bremsen. Unter den genannten Voraussetzungen läßt sich ebenfalls manuell der zweite Schaltkreis zuschalten, der abhängig von einer konstanten Beauschlagung zweier Lenkzylinder, vom Schlupf der Antriebsräder sowie von der Zugkraft das Betätigen der Differentialsperre beherrscht. Dieses bekannte System ist recht aufwendig und kompliziert, zumal bei Beanspruchung beider Schaltkreise viele Betriebsbedingungen erfüllt sein müssen, um eine Betätigung der Differentialsperre zu erreichen. Durch die bei dieser Anordnung erforderliche Vielzahl von Schaltstellen und Sensoren dürfte das System insbesondere bei den in der Landwirtschaft vorherrschenden rauhen Betriebsbedingungen sehr störanfällig sein.

Der Erfindung liegt die Aufgabe zugrunde, die vorgenannten Nachteile zu vermeiden und eine selbsttätig arbeitende Vorrichtung für eine Differentialsperre der eingangs umrissenen Gattung zu schaffen, die sich zur Anpassung an unterschiedliche Betriebsbedingungen zwischen Straßenfahrt und Feldarbeit von einer Betriebsart zur anderen umschalten läßt.

Die Aufgabe wird erfindungsgemäß dadurch gelöst, daß die Vorrichtung zumindest ein weiteres Geberelement zum Erfassen von Meßwerten der Zugkraft aufweist, und daß aus den Meßwerten des Lenkwinkels wahlweise entweder mit den Meßwerten der Zugkraft oder Fahrgeschwindigkeit Befehle für Betätigung der Differentialsperre gebildet werden.

Durch diese Maßnahmen ist dem Fahrer die Möglichkeit gegeben, für die Betätigung der Differentialsperre zwischen zwei wesentlichen Betriebsarten zu wählen, so daß das Fahrzeug stets optimal angetrieben wird. Das Umschalten von einer Betriebsart zur anderen erfolgt in einfacher Weise durch einen Schalter, der zweckdienlich am Fahrerstand angeordnet ist. Eine Vorrichtung der genannten Art läßt sich mit einfachen Elementen so herstellen, daß sie auch unter schwierigen Bedingungen störungsfrei arbeitet.

In Weiterbildung der Erfindung sind Differentialsperren an sämtlichen Achsen vorgesehen, wobei diese gleichzeitig oder nacheinander ein- bzw. ausschaltbar sind.

Zur unmittelbaren oder mittelbaren Ermittlung des Lenkwinkels sind zweckmäßig Geberelemente an der Lenkeinrichtung des Kraftfahrzeugs angeordnet.

Zweckdienlich wird die Zugkraft mittels an sich bekannter Geberelemente an allen oder auswählbaren Koppelpunkten der Geräteanbau- oder -anhängevorrichtung weglos oder durch Verschieben elastischer Bauteile ermittelt.

Ferner ist es vorteilhaft, wenn die Fahrgeschwindigkeit des Fahrzeugs schlupf los oder schlupfbehaftet beispielsweise mittels eines Drehzahlgebers z. B. an der Getriebeausgangswelle oder an einer der Achsen ermittelt wird.

Um Fehlschaltungen weitgehend zu vermeiden, ist es ferner vorteilhaft, wenn die Sperrwirkung in bestimmten Schaltstellungen des Gruppengetriebes des Kraftfahrzeugs, z. B. bei schneller Straßenfahrt, aufgehoben ist.

Zur willkürlichen Betatigung der Differentialsperre ist vorgesehen, daß die selbsttätige Steuereinrichtung eine manuelle Übersteuerungseinrichtung aufweist.

Nach einer weiteren zweckmäßigen Ausgestaltung der Erfindung ist jedes der Geberelemente mit einem Verstärker gekoppelt, wobei die verstärkten Meßwerte je einem einen gespeicherten Sollwert aufweisenden Vergleichselement zugeführt werden.

Schließlich hat es sich als vorteilhaft erwiesen, wenn das Vergleichsglied für die Meßwerte des Lenkwinkels unmittelbar mit dem Eingang eines logischen Schaltgliedes sowie die beiden anderen Vergleichselemente über einen Schalter wahlweise mit dem anderen Eingang des logischen Schaltgliedes in Verbindung stehen, wobei das logische Schaltglied ausgangsseitig mit einem Verstärker zur Betätigung eines Stellmagneten für die Differentialsperre verbunden ist.

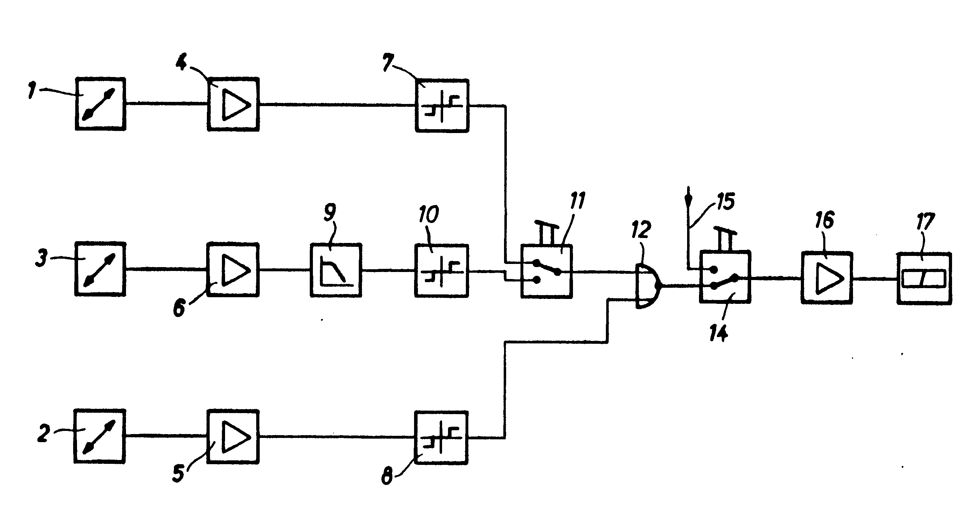

Ein Ausführungsbeispiel der Erfindung wird im folgenden anhand der Zeichnung näher beschrieben. Die einzige Abbildung zeigt ein aus Sinnbildern zusammengestelltes Blockschaltbild der Erfindung.

Das Blockschaltbild zeigt einen Drehzahlgeber 1, der beispielsweise an einer nicht dargestellten Kegelritzelwelle eines Ausgleichsgetriebes die Drehzahl vorzugsweise berührungslos abgreift. Außerdem ist ein die Auslenkung am Lenkzylinder des Fahrzeugs als Meßwert für den Lenkwinkel abgreifender Geber 2 vorgesehen, der beispielsweise als Potentiometer ausgebildet sein kann. Ein dritter Geber 3 dient zur Aufnahme von Meßwerten der Zugkraft und greift beispielsweise an einem von der Zugkraft auf Dehnung beeinflußten Bauteil als Meßstreifen an. Alle drei Geber 1 - 3 sind über Leitungen elektrisch mit je einem Verstärker 4 - 6 verbunden, die die eingehenden Meßwerte auf für die weitere elektrische Auswertung günstige Werte verstärken. Die Verstärker 4 - 6 können auch mit Wandlern, Demodulatoren oder dergl. gekoppelt sein, welche eingehende Meßwerte insbesondere so umformen, daß diese im weiteren Verlauf der elektrischen Auswertung gemeinsam verarbeitet werden können.

Die Ausgänge der Verstärker 4 bzw. 5 stehen direkt mit je einem Vergleichselement 7 bzw. 8 in Verbindung, während der Verstärker 6 über ein Filter 9 mit einen Vergleichselement 10 verbunden ist. Das Filter 9 hat die Aufgabe, die vom Geber 3 in Form von elektrischen Schwingungen ausgehenden Meßwerte zu dämpfen, indem es die Schwingungsspitzen im Sinne einer Tiefpaßfilterung unterdrückt. Bierdurch wird bei eingeschalteter Zugkraftmessung eine ausgeglichene ruhige Arbeitsweise für das Schalten der Differentialsperre erreicht.

In den Vergleichselementen 7, 8 und 10 ist für die drei Arten von Meßwerten je ein Sollwert als Vergleichsgröße gegenüber diesen Meßwerten gespeichert. Die in die Vergleichselemente 7, 8 und 10 gelangenden verstärkten Meßwerte werden ständig mit den entsprechenden Sollwerten verglichen, wobei die Meßwerte entweder unter oder über ihrem vorgegebenen Sollwert liegen. Abhängig von diesen Vergleichen liegt dann am Ausgang jedes Vergleichselementes 7, 8 und 10 eine Ausgangsspannung an oder nicht. Die Ausgänge der Vergleichselemente 7 und 10 sind mit einem Umschalter 11 verbunden und können bei dessen Betätigung wechselweise mit dem Eingang eines logischen Schaltgliedes 12 verbunden werden, während das Vergleichselement 8 ständig mit dem anderen Eingang des logischen Schaltgliedes 12 in Verbindung steht. An beiden Eingängen des logischen Schaltgliedes 12, das die Typenbezeichnung NOR trägt, herrschen somit die gleichen Spannungsverhältnisse vor, wie sie an den Ausgängen der angeschlossenen Vergleichs elemente 8 und 7 bzw. 10 gegeben sind.

Ein dem logischen Schaltglied 12 nachgeschalteter Umschalter 14 ist zusätzlich durch eine Leitung 15 mit einem nicht dargestellten Geber verbunden, der zur manuellen Betätigung der Differentialsperre Führungssignale abgibt. Ausgang des Umschalters 14 ist zur Übertragung von Schaltimpulsen an einen Verstärker 16 angeschlossen, der seinerseits bei Bedarf die erforderliche Energie zum Schalten eines Stellmagneten 17 für die Betätigung der nicht dargestellten Schalteinrichtung der Differentialsperre erzeugt.

Beim Betrieb eines Fahrzeugs mit einer Differentialsperre der beschriebenen Art werden die vom Geber 2 ermittelten Meßwerte für den Lenkwinkel zunächst verstärkt und dann im Vergleichselement 8 mit dem vorgegebenen Sollwert für den Lenkwinkel verglichen. Dabei ergibt sich je nach Größe des Lenkwinkels und der entsprechenden Meßwerte am Ausgang des Vergleichselements 8 eine elektrische Spannung oder dessen Ausgang bleibt spannungslos. Im vorliegenden Ausführungsbeispiel ist die Differentialsperre gemäß Stellung des Schalters 11 auf Straßenfahrt eingestellt. Die vom Drehzahlgeber 1 ständig ermittelten und anschließend verstärkten Meßwerte gelangen zum Vergleichslement 7, an dessen Ausgang dann je nach Vergleichsergebnis eine elektrische Spannung anliegt oder nicht. Entsprechend den Spannungszuständen an den Ausgängen der beiden Vergleichselemente 7 und 8 wird das anschließende logische Schaltglied 12 elektrisch angesteuert oder nicht angesteuert. Das logische Schaltglied 12 entscheidet dann jeweils abhängig von dem an seinen beiden Eingängen herrschenden Spannungszustand, ob die Differentialsperre durch Ansteuerung des Verstärkers 16 zur Betätigung des Stellorgans 17 einzuschalten ist oder nicht. In gleicher Wirkungsweise kann beim Arbeitseinsatz des Fahrzeugs durch Betätigung des Umschalters 11 anstelle des Schaltzweiges mit dem Drehzahlgeber 1 der Schaltzweig mit dem Geber 3 für die Zugkraft mit dem logischen Schaltglied 12 verbunden werden. Bei dieser Stellung des Umschalters 11 werden die Meßwerte des Lenkwinkels und die der Zugkraft gemeinsam für das Schalten der Differentialsperre ausgewertet

Abweichend von der gezeigten Ausführung einer Schaltvorrichtung für eine Differentialsperre kann anstelle des amschalters 11 auch ein zweites logisches Schaltglied der beschriebenen Art angeordnet sein, so daß außer den ermittelten Meßwerten des Lenkwinkels zugleich auch die aufgenommenen Meßwerte der Fahrgeschwindigkeit und des Zugwiderstandes für die Betätigung der Differentialsperre ausgewertet werden.

**Patentansprüche**

1. Vorrichtung zum form- oder kraftschlussigen Betätigen der Differentialsperre an einem zumindest zweiachsigen Fahrzeug, insbesondere an einem land- und/oder bauwirtschaftlich nutzbaren Kraftfahrzeug mit einem Ausgleichsgetriebe, wobei Geberelemente (1, 2) zum Erfassen von Meßwerten des Lenkwinkels und der Fahrgeschwindigkeit des Fahrzeugs vorgesehen sind, die bei Überschreiten oder Unterschreiten von bestimmten Grenzwerten über Stellorgane ein selbsttätiges Ein- bzw. Ausschalten der Differentialsperre bewirken, und mit einem Schaltorgan zum willkürlichen Betatigen der Differentialsperre,

dadurch gekennzeichnet, daß die Vorrichtung zumindest ein weitere Geberelement (3) zum Erfassen von Meßwerten der Zugkraft aufweist, und daß aus den Meßwerten des Lenkwinkels wahlweise entweder mit den Meßerten der Zugkraft oder der Fahrgeschwindigkeit Befehle für die Betätigung der Differentialsperre gebildet werden.

2. Vorrichtung nach Anspruch 1,
dadurch gekennzeichnet, daß Differentialsperren an sämtlichen Achsen vorgesehen sind und diese gleichzeitig oder nacheinander ein- bzw. ausschaltbar sind.

3. Vorrichtung nach den Ansprüchen 1 und 2,
dadurch gekennzeichnet, daß zur unmittelbaren oder mittelbaren Ermittlung des Lenkwinkels Geberelemente (2) an der Lenkeinrichtung des Kraftfahrzeugs angeordnet sind.

4. Vorrichtung nach einem der vorhergehenden Ansprüche,
dadurch gekennzeichnet, daß die Zugkraft mittels Geberelementen (3) an allen oder auswählbaren Koppelpunkten der Geräteanbau oder anhängevorrichtung weglos oder durch Verschieben elastischer Bauteile ermittelt wird.

5. Vorrichtung nach einem der vorhergehenden Ansprüche,
dadurch gekennzeichnet, daß die Fahrgeschwindigkeit des Kraftfahrzeugs schlupflos oder schlupfbehaftet beispielsweise mittels eines Drehzahlgebers (1) z. B. an der Getriebeausgangswelle oder an einer der Achsen ermittelt wird.

6. Vorrichtung nach einem der vorhergehenden Ansprüche,
dadurch gekennzeichnet, daß die Sperrwirkung in bestimmten Schaltstellungen des Gruppengetriebes des Kraftfahrzeugs aufgehoben ist.

7. Vorrichtung nach einem der vorgehenden Ansprüche,
dadurch gekennzeichnet, daß die selbsttätige Steuereinrichtung eine manuelle Übersteuerungseinrichtung aufweist.

8. Vorrichtung nach einem der vorhergehenden Ansprüche,
dadurch gekennzeichnet, daß jedes der Geberelemente (1 bis 3) mit einem Verstärker (4 bzw. 5 bzw. 6) gekoppelt ist und daß die verstärkten Meßwerte je einem einen gespeicherten Sollwert aufweisenden Vergleichselement (7 bzw. 8 bzw. 10) zugeführt werden.

9. Vorrichtung nach einem der vorhergehenden Ansprüche,
dadurch gekennzeichnet, daß das Vergleichsglied (8) für die Meßwerte des Lenkwinkels unmittelbar mit dem Eingang eines logischen Schaltgliedes (12) sowie die beiden anderen Vergleichselemente (7 und 10) ausgangsseitig über einen Schalter (11) wahlweise mit dem anderen Eingang des logischen Schaltgliedes (12) in Verbindung stehen und daß das logische Schaltglied (12) ausgangsseitig mit Verstärker (16) zur Betätigung eines Stellmagneten (17) für die Differentialsperre verbunden ist.

**Claims**

1. Apparatus for the positive or non-positive actuation of a differential lock of a vehicle having at least two axles, especially a motor vehicle of the kind used in the agricultural and/or building industries, and having differential gearing, in which the apparatus includes transducers (1, 2) serving to measure the vehicle's steering angle and travelling speed and to bring about - in the event of predetermined critical values being exceeded or not being reached - <u>via</u> regulators automatic engagement or, respectively disengagement of the differential lock, and also includes a control mechanism for engaging or disengaging the differential lock at will,

characterized in that the apparatus includes at least one further transducer (3) for measuring the tractive force, and in that the measured values of the steering angle are selectively combined either with those of the tractive force or with those of the travelling speed to produce control signals for the actuation of the differential lock.

2. Apparatus according to claim 1,
characterized in that each of the vehicle's axles is provided with a differential lock, and in that the locks are arranged to engage or disengage either simultaneously or one after the other.

3. Apparatus according to claim 1 or claim 2,
characterized in that the transducers (2) for directly or indirectly measuring the steering angle are arranged on the vehicle's steering mechanism.

4. Apparatus according to any of the preceding claims,
characterized in that the further transducer (3), or transducers (3), is, or are, arranged to measure - pathlessly or with reference to the displacement of elastic components - the tractive force at all or at selectable coupling points for attachable or trailable implements.

5. Apparatus according to any of the preceding claims,

characterized in that the vehicle's travelling speed is arranged to be measured slippingly or non-slippingly, for example by means of a tachometer (1), at, for example, the propellor shaft or at one of the axles.

6. Apparatus according to any of the preceding claims, characterized in that the locking action in predeterminable gear-change positions of the vehicle's change-speed gearbox is neutralised.

7. Apparatus according to any of the preceding claims,

characterized in that its automatically operable system includes a manually operable device for overriding the automatic operation.

8. Apparatus according to any of the preceding claims,

characterized in that each of the transducers (1 to 3) is connected to a respective amplifier (4, 5 and 6 respectively), and in that the thus amplified measured values are transmitted to respective comparators (7, 8 and 10 respectively), in each of which a respective rated value is stored.

9. Apparatus according to any of the preceding claims, characterized in that the comparator (8) for the measured values of the steering angle is connected directly to one input of a logical element (12), that the respective outputs of the two other comparators (7 and 10) are selectively connectable by a switch (11) to another input of the logical element (12), and in that the logical element's output is connected to an amplifier (16) serving to actuate an operating magnet (17) for the differential lock.

## Revendications

1. Dispositif pour actionner, par interpénétration de formes ou par adhérence, un verrouillage de différentiel sur un véhicule comportant au moins deux essieux, notamment sur un véhicule automobile utilisable économiquement pour des travaux agricoles ou des travaux de construction avec un différentiel, des éléments émetteurs (1, 2) état prévus pour détecter des valeurs de mesure de l'angle de direction et de la vitesse de déplacement du véhicule, éléments qui, lors d'un dépassement ou d'un franchissement vers le bas de valeurs-limites déterminées, assurent, par l'intermédiaire d'organes de réglage, un enclenchement ou un déclenchement automatique du verrouillage du différentiel, et avec un organe de commutation pour actionner à volonté le verrouillage du différentiel, dispositif caractérisé en ce qu'il comporte, en outre, au moins un autre élément émetteur (3) pour détecter des valeurs de mesure de l'effort de traction, et que, à partir des valeurs de mesure de l'angle de direction, des ordres pour l'actionnement du verrouillage du différentiel peuvent être élaborés au choix avec les valeurs de mesure de l'effort de traction ou bien de la vitesse de déplacement.

2. Dispositif selon la revendication 1, caractérisé en ce que des verrouillages de différentiel, sont prévus sur l'ensemble des essieux et que ces verrouillages peuvent être enclenchés ou déclenchés simultanément ou successivement.

3. Dispositif selon les revendications 1 et 2, caractérisé en ce que, pour la détermination directe ou indirecte de l'angle de direction, des éléments émetteure (2) sont disposés sur le dispositif de direction du véhicule automobile.

4. Dispositif selon l'une des précédentes revendications, caractérisé en ce que l'effort de traction est déterminé au moyen d'éléments émetteurs (3) sur tous les points de couplage, ou sur des points de couplage susceptibles d'être sélectionnés du dispositif de montage ou de suspension de l'équipement, soit directement, soit par le déplacement de pièces constitutives élastiques.

5. Dispositif selon une des précédentes revendications, caractérisé en ce que la vitesse de déplacement du véhicule est déterminée sans glissement ou avec glissement, par exemple au moyen d'un indicateur de vitesse de rotation (1), par exemple sur l'arbre de sortie de la transmission ou bien sur l'un des essieux.

6. Dispositif selon une des précédentes revendications, caractérisé en ce que l'effet de verrouillage est suspendu dans certaines positions de commutation de la boîte de vitesses du véhicule.

7. Dispositif selon une des précédentes revendications, caractérisé en ce que le dispositif de commande automatique comporte un dispositif manuel de surcommande.

8. Dispositif selon une des précédentes revendications, caractérisé en ce que chacun des éléments émetteurs (1 à 3) est couplé avec un aplificateur (4 ou 5 ou 6) et que les valeurs de mesure amplifiées sont chacune appliquées à un élément de comparaison (7 ou 8 ou 10), comportant une valeur de consigne mémorisée.

9. Dispositif selon une des précédentes revendications, caractérisé en ce que l'élément de comparaison (8) pour les valeurs de mesure de l'angle de direction, est directement relié à l'entrée d'un organe logique de commutation (12), tandis que les deux autres éléments de comparaison (7 et 10) sont reliés au choix, côté sortie, par l'intermédiaire d'un commutateur (11), à l'autre entrée de l'organe logique de commutation (12), et que cet organe de commutation est relié côté sortie à un amplificateur (16) pour actionner un électroaimant (17) de positionnement du verrouillage du différentiel.